# EUROPEAN PATENT SPECIFICATION

(11) **EP 2 454 062 B1**
(45) Date of publication and mention of the grant of the patent: **07.03.2018**
(21) Application number: 10752183.3
(22) Date of filing: 14.07.2010
(51) Int. Cl.: B27N 3/00, C08J 11/00, B29C 70/46, B29B 7/90, B29B 13/06, B29B 7/14, B29B 7/92, B29B 17/00, B29K 75/00, C08J 5/04, C08G 18/08

(54) **METHOD FOR PRODUCING A SHAPED OBJECT OF A COMPOSITE MATERIAL, A SHAPED OBJECT PRODUCED ACCORDING TO THIS METHOD**
VERFAHREN ZUR HERSTELLUNG EINES FORMOBJEKTS AUS EINEM VERBUNDSTOFF UND NACH DIESEM VERFAHREN HERGESTELLTES FORMOBJEKT
PROCÉDÉ DE PRODUCTION D UN OBJET FAÇONNÉ CONSTITUÉ D UN MATÉRIAU COMPOSITE, OBJET FAÇONNÉ PRODUIT SELON CE PROCÉDÉ

(30) Priority: 15.07.2009 BE 200900430
(43) Date of publication of application: 23.05.2012
(73) Proprietor: Debergh, Ludo, 4607 Mortroux (BE)
(72) Inventor: Debergh, Ludo, 4607 Mortroux (BE)
(74) Representative: Caers, Raphael Frans Ivo
(86) International application number: PCT/IB2010/053218
(87) International publication number: WO 2011/007322

(56) References cited:
- EP-A1- 0 320 042
- EP-A1- 0 528 456
- EP-A2- 0 442 435
- DE-A1- 4 131 172
- DE-A1- 19 715 418
- GB-A- 2 253 854
- J. M. Henshaw: "Recycling and Disposal of Polymer-Matrix Composites" In: D. B. Miracle & S. L. Donaldson: "Composites", December 2001 (2001-12), ASM International, USA, XP002612183, ISBN: 0871707039 vol. 21, pages 1006-1012, the whole document
- Pieterjan Hantson: "Masterproef PU trim foam recycling", Internet citation, 21 May 2008 (2008-05-21), pages 1-140, XP002616670, Retrieved from the Internet: URL:http://dspace.howest.be/bitstream/1004 6/494/1/Thesis_PU_trim_foam_recycling.pdf [retrieved on 2011-01-13]
- DRU M. WILSON: "The Implementation of Recycled Thermoset Composites in Thermoforming Molds", JOURNAL OF INDUSTRIAL TECHNOLOGY, vol. 19, no. 2, February 2003 (2003-02), - April 2003 (2003-04), pages 1-5, XP002616671,
- Dilhan M. Kalyon et al.: "Recycling of Thermosets as filler", ANTEC, 1984, pages 640-642, XP002616672, Retrieved from the Internet: URL:http://www.hfmi.stevens.edu/publicatio ns/010.PDF [retrieved on 2011-01-13]

## Description

### FIELD OF THE INVENTION

The invention relates to a method for manufacturing an object from a composite material, and to a shaped object produced in this way.

### BACKGROUND OF THE INVENTION

Various methods for manufacturing composite materials are known. Often a filler material is thereby used to obtain a certain volume, to which fibers are added for increasing the strength, and to which a binder is added for keeping everything together.

EP0442435 describes a method for recycling waste or used objects made from cured ("cross-linked") plastic, particularly polyurethane, which comprises the steps of: a) reducing the size of leftovers from waste products composed of cross-linked synthetic resin, in particular polyurethane or polyurea, into flakes or granules with a size <15mm, in particular <= 5mm; b) the material reduced in size is processed in a device using thermo-mechanical energy, for example a kneader for 5 to 30 minutes at a device temperature of 130-180°C, whereby a mechanical-thermal decomposition takes place without mass loss; c) in a mixing device is added to this mass a polyfunctional isocyanate for the renewal of the cross-linking, whereby the mass has a temperature ≤ 80 °C and the mixing device has a temperature ≤ 30 °C; d) the reaction mixture is cooled within 10 minutes; e) the mixture is heated for 5 to 20 minutes in a mould to a temperature of 130°C-170°C at a pressure of at least 100 bar and is thereby again crosslinked.

A disadvantage of this method and the resulting product is that the product has only moderate mechanical properties.

### SUMMARY OF THE INVENTION

It is an object of the invention to provide a method for manufacturing an object from a composite material which comprises thermoset particles, with improved mechanical properties (e.g. a higher flexural strength).

This object is achieved by a method having the characteristics of the first claim. Thereto the method according to the invention comprises the following steps:
a) providing a dry homogeneous mixture comprising fiber material with an average length of 2-40 mm and a granulate of thermoset particles with an average particle size of 2-15 mm, whereby the volume percent of the fiber material is 10-80% of the dry homogeneous mixture, and whereby the dry homogeneous mixture has a moisture content which is in equilibrium with air having a dew point of at most 25°C;
b) adding at least one polyol and at least one isocyanate to the dry homogenous mixture for forming a viscous compound mixture, whereby the weight percent of the at least one polyol and the at least one isocyanate together is 4.0-25.0% of the dry homogeneous mixture, and mixing the viscous compound mixture, thereby forming a viscous homogeneous mixture;
c) forming a shaped object by curing the viscous homogeneous mixture in a mould at a temperature of 15-60°C under a pressure of at least 50 bar, whereby the pressure is maintained for at least 1 minute.

In this document, by "particle diameter" or "grain size" or "particle size" of a fragment or a particle is meant the largest linear distance between two points of that particle. By "average" is meant the mathematical average over a group of particles.

In this document, by "length of the fiber material" or "fiber length" is meant the largest linear distance between two points of a fragment of a fibrous material, even if the fragment does not have a pronounced elongated shape. By "average" is meant the mathematical average over a group of fragments.

In contrast to the method described in EP0442435 where the cohesion of the particles of the mixture is achieved by cross-linking by means of a poly-isocyanate, and whereby dust and fibers need to be removed because they disturb the cross-linkage (as described in EP0442435), the inventor has surprisingly found that it is possible to add fibers (e.g. glass fibers or carbon fibers) to such a granulate whereby the mechanical properties (such as flexural strength) of the shaped object are improved. According to the invention therefor polyol and isocyanate are added to the dry mixture, which will react together to form polyurethane which serves as a binder for both the granules and for the fibers. By mixing the viscous mixture such that the polyol and the isocyanate are substantially uniformly distributed over the dry homogeneous mixture, this binder (polyurethane) will spread between and around all particles. By compressing this viscous homogeneous mixture before the reaction of the polyol and isocyanate takes place, the polyol and the isocyanate will be pressed in the pores of the particles, and only then react, so that a very strong mechanical adhesion is achieved between the filler material (granules) and the reinforcing material (fibers) and the binder (polyurethane). By shaping in a mould objects having widely different shapes may be produced.

Tests have shown that the resulting object has good mechanical properties (e.g. a drain cover having a flexural strength which meets the load class A and/or B and/or C of standard NBN EN 124) which are comparable to those of existing cast iron objects of the same size, so that the method according to the invention may be used for manufacturing a wide range of objects for which until now usually only concrete or cast iron were used, particularly in the construction industry.

A further advantage of the method according to the present invention is that it allows a large number of non-thermoplastic materials as well as reject or used fiber materials to be recycled, so that these materials no longer have to be incinerated or landfilled, which is beneficial for the environment, and whereby the cost of the objects to be shaped may be drastically reduced. A further advantage of the shaped object according to the invention as compared to a similar object in concrete or steel or cast iron is its lower weight. Another advantage is that the shaped object is highly impact and temperature resistant (over a temperature range of -40°C to +70°C). Another advantage of the shaped object according to the invention is that it has a less slippery surface, which is especially advantageous during winter time, which makes such objects especially suitable as paving tiles or the like. Another advantage compared to steel or cast iron is that the composite material of the shaped object according to the invention does not rust. Another interesting advantage thereby is that steel has become particularly scarce and expensive in recent years, so that the price of scrap metal has increased significantly, and because of that also the number of thefts of metal objects located on or along public roads (e.g. sewer gratings, drain covers and the like). This is not only very dangerous for pedestrians or vehicles, but also costs the authorities a lot of money. When the object according to the invention is as much as possible made from recycled material, not only the cost of the shaped objects is very low, but theft is also avoided, since there is no (paying) market for stolen shaped objects from such recycled material.

The inventor has found that the above method does not work well when thermoplastic particles (such as e.g. PVC or PE or PP) or thermoplastic fiber materials are used, because it does not adhere well to polyurethane.

In an embodiment of the method according to the invention, providing the dry homogeneous mixture comprises the following steps: - providing a fiber material with an average length of 2 - 40 mm, and drying of the fiber material until the fiber material has a moisture content in equilibrium with air having a dew point of at most 25 °C, thereby forming a dried fiber material; - providing a granulate of thermoset particles with an average particle size of 2 - 15 mm, and drying of the granulate until the granulate has a moisture content in equilibrium with air having a dew point of at most 25 °C, thereby forming a dried granulate; - mixing the dried fiber material and the dried granulate to obtain the dry homogeneous mixture, whereby the volume percent of the fiber material is 10 - 80% of the dry homogeneous mixture.

If the fiber material and the thermoset particles are too large, they need to be reduced in size using known techniques. Depending on the raw materials, this reduction in size may occur before or after the drying step. Reduction in size and drying may also be done in several steps. If the fiber material and the thermoset particles contain too much moisture, they should be dried. In a first embodiment of the method according to the invention, the fiber material and the thermoset particles are dried separately. This offers the advantage that each drying equipment may be controlled at its own temperature and humidity, and that the driers may include other mechanical means for optimum drying of either the fiber material, or the granulate of thermoset particles. Drying before mixing also offers the advantage that the mixing of the fiber material and the granules in the desired ratio is better controllable with dry matter than with matter which contains too much moisture.

Preferably the drying of the fiber material is performed by bringing it in contact with dry warm air having a temperature of 100 - 300 °C, preferably 150 - 300 °C, more preferably 200 - 275 °C, most preferably approximately 250 °C, during for example a period of typically 1 to 3 hours, depending on the moisture content of the undried fiber material. Tests have shown that fibers such as e.g. glass or carbon fibers may be dried at a higher temperature than the granulate of thermoset particles. This offers the advantage of faster drying, or that a lower dew point may be reached within a given time.

Preferably, the drying of the granulate is performed by bringing it in contact with dry warm air having a temperature of 100-175 °C, preferably a temperature of 125 -160 °C, more preferably a temperature of approximately 150 °C.

In an alternative embodiment of the method according to the invention, providing the dry homogeneous mixture comprises the following steps:
- providing a fiber material having an average length of 2 - 40 mm;
- providing a granulate of thermoset particles having an average particle size of 2 - 15 mm;
- mixing the fiber material and the granulate, whereby the volume percent of the fiber material is 10-80% of the mixture, and mixing the mixture into a homogeneous mixture;
- drying the homogeneous mixture until the mixture has a moisture content which is in equilibrium with air having a dew point of at most 25 °C, thereby forming the dry homogeneous mixture.

Thus, in an alternative embodiment, first the raw materials are mixed, and then the mixture is dried. This has the advantage that only one drying equipment is needed instead of two, and if desired, that the mixing may occur during the entire drying process, so that a separate step of mixing the dry fibers and the granular particles into a homogeneous mixture may be avoided.

Preferably the dry homogeneous mixture has a temperature of not more than 50°C, preferably not more than 45°C, more preferably not more than 40°C, even more preferably not more than 35°C. When the temperature of the dry homogeneous mixture is too high, the polyol and isocyanate will react faster, which is not desirable. On the other hand a temperature lower than the temperature of the environment is not desirable because it requires active cooling and/or slows down the reaction too much.

Preferably, the dry homogeneous mixture has a moisture content which is in equilibrium with air having a dew point of 5°C - 22°C, preferably from 10°C - 20°C, most preferably approximately 18°C. Tests have shown that the humidity of the dry homogeneous mixture is crucial for a proper adhesion of the fibers and the granular particles and for the mechanical properties of the shaped object, and that some moisture content is desired. If the moisture content is too low and thus the mixture too dry, then the polyol and the isocyanate will spread insufficiently throughout the mixture and lump formation will occur. If the humidity is too high and the mixture thus contains too much water, the mechanical properties of the shaped object are found not to be so good. Probably this is because the polyurethane will then react too quickly and/or show foam formation, and/or because a portion of the water will react with the isocyanate whereby CO₂ will be formed. The inventor has found that a method in which the humidity of the dry homogeneous mixture is reduced to a dew point of approximately 18°C appears to give very good results.

Preferably the mixing of the viscous compound mixture is performed in a period of 10 seconds - 10 minutes, preferably 10 seconds - 5 minutes, more preferably 10 sec - 2 minutes, even more preferably 10 - 60 seconds, most preferably substantially 20 seconds. Tests have shown that a good distribution of the polyol and the isocyanate in the dry homogeneous mixture is crucial for the mechanical properties of the end product. The longer the mixing time, the better the distribution, but this also depends strongly on the nature of the mixing machine. On the other hand, this time needs to be as short as possible, since the viscous homogeneous mixture needs to have been introduced into the mould, and the mould must have been brought under pressure before the reaction between the polyol and isocyanate begins. As known, this time may be "tailored" as desired, for example by adding known reaction rate reducers. Since information about this is freely available, no further explanation is required here. The time of mixing should be sufficiently large to get a good distribution, but preferably as short as possible to maximize the productivity. For a given dry homogeneous mixture and a given mixing machine, the optimal time may be determined by the person skilled in the art by performing a number of routine tests. If desired, the reaction may be extended by adding known reaction rate reducers.

Preferably, the average length of the fiber material is a length of 2 - 30 mm, preferably 3 - 20 mm, more preferably 4 - 15 mm, even more preferably 6 - 12 mm, most preferably approximately 8 mm. Tests have shown that not only the volume% of fibers, but also the average length of the fibers influences the mechanical properties (such as e.g. the flexural strength) of the shaped object, whereby a longer average length generally provides better mechanical properties (such as flexural strength). Typically good results are obtained for an average fiber length of at least 6 mm. A longer fiber length will somewhat improve the mechanical properties further, but usually the aesthetic appearance will somewhat decrease. The person skilled in the art may select an optimal average fiber length depending on the intended application.

Preferably the granules have an average particle diameter of 2 - 10 mm, preferably 3 - 7 mm, more preferably approximately 6 mm. A disadvantage of small particles (e.g. 2 mm) is that much material remains in the mixer (mixing machine), in which the polyol and isocyanate are added to and mixed with the dry homogeneous mixture, after the viscous homogeneous mixture is removed from the mixer. A disadvantage of too large particles is that the aesthetic appearance of the shaped object is not so nice and that the object ends up being less strong. Furthermore, tests have shown that the amount of polyol and isocyanate which is added to the dry homogeneous mixture needs to be adjusted to the average particle diameter of the granules. The smaller the average particle size of the granulate, the more polyol and isocyanate should be added to achieve a good adhesion.

Preferably the volume percent of the fiber material in the dry mixture is 20-60%, preferably 30-50%, more preferably approximately 40%. Tests have shown that the volume percent of the fiber material in the mixture has a strong influence on the strength of the shaped object. Generally one may say: the more fiber material, the stronger the end product (e.g. in terms of flexural strength), provided the amount of binder (i.e. polyol and isocyanate) is adjusted to the average length and quantity of the fibers and the average particle size of the granules.

Preferably the weight percent of the at least one polyol and the at least one isocyanate together is 5.0 - 20.0% of the dry mixture, preferably 5.0 - 15.0%, more preferably 5.5 - 10.0%, most preferably approximately 7,0%. Polyol and isocyanate together will form polyurethane which acts as a binder between the fibers and the granular particles of the shaped object. If an insufficient amount of binder is added to the dry homogeneous mixture, e.g. less than 5.0 weight percent, there will be an insufficient distribution of the polyol and the isocyanate, and then not all particles will be bound together, or only with a very thin film, which translates into reduced or even poor mechanical properties (such as flexural strength). If too much polyol and isocyanate is added, e.g. more than 15 weight percent, then the viscous compound mixture is very fluid, and the mixing device will be too wetted, which significantly increases the risk that the machine will stall. Moreover, these raw materials (polyol and isocyanate) are rather expensive, so that a moderate use thereof is recommended. Again, for a given dry mixture the optimum amount of binder may be determined by the skilled person, by carrying out routine tests, whereby a value of 7 weight percent is a good starting value.

Preferably the curing of the viscous homogeneous mixture occurs in the mould having a temperature of 15 - 50°C, preferably 15 - 40°C, more preferably 15 - 30°C, most preferably approximately 20°C. The mould is not heated, which is a major advantage of the method of the present invention, a.o. because of the energy savings. At the start of production the mould temperature is equal to the ambient temperature of the factory (e.g. 18 °C in winter time - 30 °C in summer time), and the mould typically slightly warms up (e.g. +5 to 10°C) during the production because of the compression and the exothermic reaction of the formation of polyurethane. A mould temperature of 20°C - 40°C appears to give very good results, at temperatures above 50°C the curing occurs somewhat too quickly, at temperatures below 15 °C too slowly.

Preferably the curing in the mould occurs at a pressure of at least 100 bar, preferably at least 150 bar, more preferably at least 175 bar, most preferably at least 200 bar. The pressure with which the viscous homogeneous mixture is compressed in the mould has an influence on the final volume of the object, but also on its mechanical properties. This pressure should be maintained during at least 1 minute, preferably during at least 2 minutes.

Preferably at least one kind of reject and/or recycled fiber material is used. And preferably at least one kind of reject or recycled thermoset particles is used. By using reject materials or used materials, such materials no longer have to be incinerated or landfilled, which is beneficial for the environment, but additionally these raw materials are available at a low price, allowing the cost of the shaped objects to be drastically reduced.

It is also an object of the invention to provide a shaped object produced by this method, in particular a drain cover which meets the requirements of load class B according to the standard NBN EN 124.

### BRIEF DESCRIPTION OF THE DRAWINGS

The present invention will be described in terms of particular embodiments and with reference to certain drawings but the invention is not limited thereto, but only by the claims. The drawings are only schematic and are not exhaustive. The drawings are not necessarily drawn to scale, and the size of some elements may be exaggerated for illustrative purposes. The dimensions and the relative dimensions do not necessarily reflect the actual proportions in the practice of the invention. The drawings are intended to describe principles of the invention. Embodiments of the invention may use combinations of the various features and elements of different drawings.
Figure 1A shows an example of a method for providing a dry homogeneous mixture.
Figure 1B shows schematically the steps of a preferred embodiment of the method according to the invention.
Figures 2A-2E show how a first shaped object, in particular a rectangular frame, may be formed in a first mould according to the method of the invention.
Figures 3A-3E show how a second shaped object, in particular a flat plate or a floor tile, may be formed in a second mould according to the method of the invention.
Figures 4A-4C show a drain cover according to the present invention, in perspective view, top view and side view.
Figures 5A-5C show a sewer pit according to the present invention, in perspective view, top view and side view.
Figure 6 shows a clinker according to the present invention.
Figure 7 shows a hydrant protection, or a hydrant base plate according to the present invention.
Figure 8 shows a tile according to the present invention.
Figure 9 shows a principle schematic of a mixer which may be used to perform the method of the present invention.

### DETAILED DESCRIPTION

### REFERENCES

- 1: thermoset particles
- 2: granulate of thermoset particles having a predetermined average particle size.
- 3: dried granulate of thermoset particles
- 4: fiber material
- 5: fiber material having a predetermined average length
- 6: dried fiber material
- 7: polyol
- 8: isocyanate
- 10: dry mixture
- 11: dry homogeneous mixture
- 12: viscous mixture
- 13: viscous homogeneous mixture
- 14: homogeneous mixture
- 20: shaped object
- 21: drain cover
- 22: sewer pit, cleanout drain
- 23: clinker
- 24: base plate or frame for a hydrant
- 25: floor tile
- 28: mould
- 29: lower part of the mould
- 30: upper part of the mould
- 31: mixer, mixing device (of the viscous mixture)
- 32: motor
- 33: inlet1 for the dry homogenous mixture
- 34: inlet2 for polyol
- 35: inlet3 for isocyanate
- 36: outlet valve
- 37: shaft of the mixing device
- 38: mixing chamber
- 40: reducing the size of the granulate of thermoset particles
- 41: drying the granulate of thermoset particles
- 42: reducing the size of the fiber material
- 43: drying the fiber material
- 44: mixing the granulate and the fibers
- 45: drying the mixture
- 46: adding polyol
- 47: adding isocyanate
- 48: mixing the viscous mixture
- 49: curing of the viscous mixture in the mould
- 50: cooling of the granulate
- 51: cooling of the fiber material

The invention relates to a method for manufacturing a shaped object from a composite material which comprises thermoset particles, the method comprising the following steps:
a) providing a dry homogeneous mixture 11 comprising fiber material 4 with an average length of 2 - 40 mm and a granulate of thermoset particles with an average particle size of 2 - 15 mm, whereby the volume percent of the fiber material is 10 - 80% of the dry homogeneous mixture, and whereby the moisture content of the dry homogeneous mixture 11 is in equilibrium with air having a dew point of at most 25 °C;
b) adding at least one polyol 7 and at least one isocyanate 8 to the dry homogenous mixture 11 for forming a viscous mixture 12, whereby the weight percent of the at least one polyol 7 and the at least one isocyanate 8 together is 4.0 - 25.0% of the dry homogeneous mixture 11, and mixing the viscous mixture 12, thereby forming a viscous homogeneous mixture 13;
c) forming a shaped object 20 by curing the viscous homogeneous mixture 13 in a mould 28 at a temperature of 15 - 60 °C under a pressure p of at least 50 bar, whereby the pressure p is maintained for at least 1 minute.

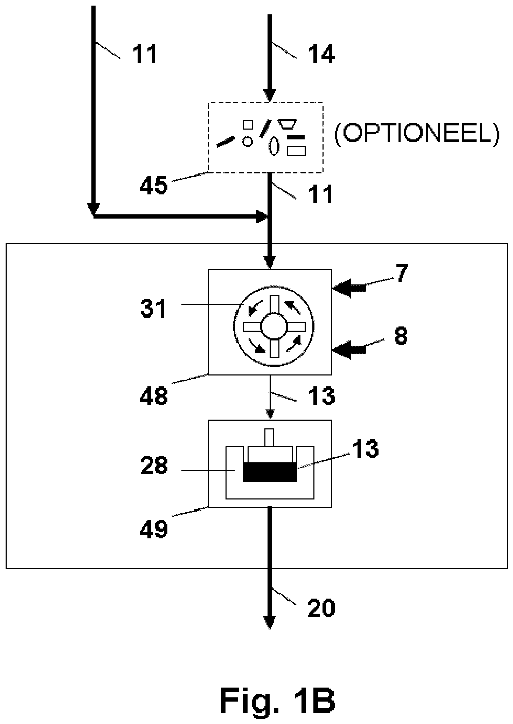

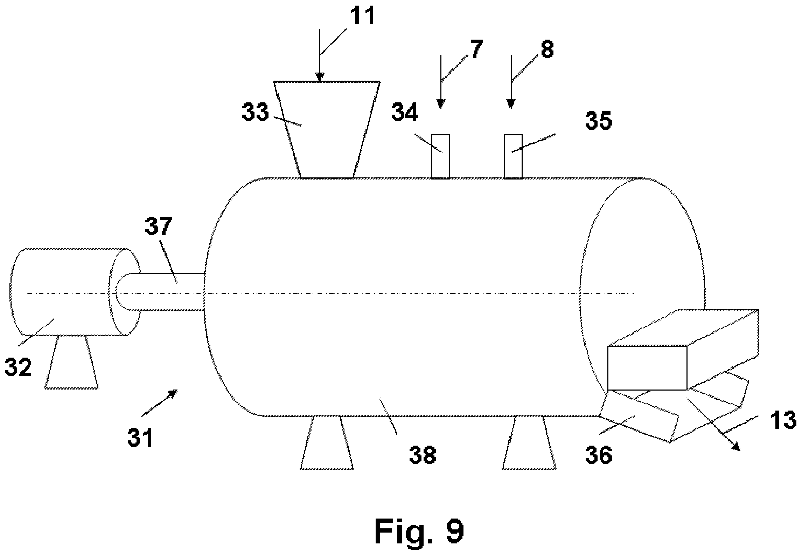

The steps of this procedure are illustrated in Fig 1B, where a dry homogeneous mixture 11 is introduced into a mixing machine or mixer 31. An example of such a mixing machine 31 will be discussed in more detail further by means of Fig 9. In the mixer 31 also an amount of polyol 7 and isocyanate 8 is introduced and distributed as uniformly as possible over the dry homogeneous mixture 11, so that a viscous homogeneous mixture 13 is obtained. Step 48 shows the mixing of the viscous mixture 13. This viscous homogeneous mixture 13 is introduced in a mould 28 which is for example located in a hydraulic press for exerting a pressure on the mould 28. After the viscous homogeneous mixture 13 in step 49 is at least partly cured in the mould 28, the shaped object 20 may be removed from the mould. Possibly conventional finishing treatments may be performed on the shaped object, such as deburring, grinding or drilling. The step 45 of drying the homogeneous mixture 14 (top of Fig 1B) is an optional step. If the moisture content of the homogeneous mixture 14, which comprises fiber material and a granulate of thermoset particles, is sufficiently low (e.g. in equilibrium with air having a dew point of 18°C) then the homogeneous mixture 14 does not need to be dried further, but may be introduced directly in the mixer 31. If the moisture content of the homogeneous mixture 14 is higher than a specified value (corresponding to a dew point of air of e.g. 18 °C), then the homogeneous mixture 14 is first dried in step 45 before being introduced into the mixing machine 31. The family of polyols and isocyanates for forming polyurethane are well known substances, which are freely available on the market, e.g. under the trade name Baydur20® offered by the company Bayer, but other polyols and isocyanates considered suitable by the skilled person may also be used .

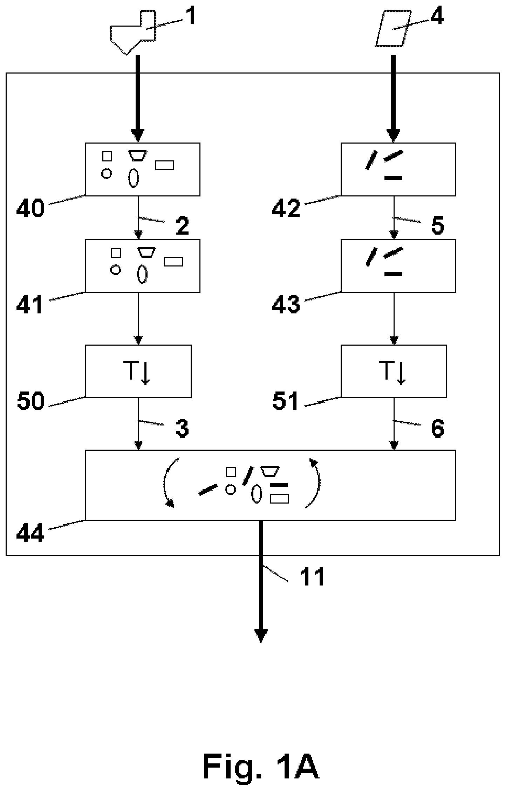

Fig 1A shows a preferred embodiment of a method for manufacturing the dry homogeneous mixture 11. Started is from a thermoset raw material 1, e.g. a granulate of recycled thermoset particles with dimensions of e.g. 5 mm - 5 cm. This raw material is first reduced in size in step 40 by known techniques (e.g. grinding, cutting, etc) to an average particle diameter (also called "grain size") of e.g. approximately 8 mm, and then dried in step 41. The size reduction step 40 may be skipped if the average particle diameter of the thermoset raw material 1 is already sufficiently small (e.g. <10 mm). The drying step 41 may be skipped if the moisture content of the thermoset raw material 1 is already sufficiently low (i.e. in equilibrium with air having a dew point of e.g. 18 °C). The moisture content of the granulate may be measured with known devices. If the granulate is dried, it must also be cooled (e.g. in contact with ambient air) to a temperature of e.g. at most 35°C. The result is a dried granulate 3 with an average particle size of e.g. 8 mm. One also starts from a fiber material 4, e.g. rolls of rejected glass fiber mats, which in step 42 are first reduced in size to fibers with an average length of e.g. approximately 6 mm, which in turn are dried in step 43. The step of reducing the fiber material size 42 may be skipped if the fiber material 4 is already sufficiently small. The step of drying the fiber material 43 may be skipped if the fiber material is already sufficiently dry. Like with the granules this moisture content may be measured. If the fiber material is dried, it also needs to cool down (e.g. in contact with ambient air) to a temperature of e.g. at most 35°C. The result is a dried fiber material 6 with an average length of e.g. 6 mm. The dried granulate 3 and the dried fiber material 6 are subsequently combined according to a ratio of e.g. 40 volume% of fibers, and mixed in step 44 into a dry homogeneous mixture 11. This mixing preferably occurs at room temperature (i.e. 18 °C - 30 °C). Variations of the method for providing the dry homogeneous mixture 13 are possible. For example, depending on the characteristics (e.g. size) of the thermoset raw material 1, the granulate drying step 41 may be performed before step 40 for reducing the thermoset particle size. The same applies to the fiber material 4, where possibly the drying step 43 may be performed before the size reduction in step 42. Optionally, the mixing step 44 may also precede the step of cooling 50, 51. Or, as it often happens in practice, the cooling will partially occur before the mixing, and partially during or after the mixing. In a variant of the method for providing the dry homogeneous mixture 11, the size-reduced granulate may also first be mixed with the size-reduced fibers in the desired proportion (e.g. 40 volume% fibers), and then the mixture may be dried and cooled. Other variations to obtain a dry homogeneous mixture 11 may however also be used.

Referring back to Fig 1B, when the dry homogeneous mixture 11 of Fig 1A is almost immediately (e.g. within the hour when the air of the environment is not too humid) used in the mixer 31 of Fig 1B, then the additional step 45 of drying the homogeneous mixture 14 is futile. However, if the dry homogeneous mixture 11 of Fig 1A is first stored for several hours or even days in a non-hermetic packaging or container (e.g. in big bags of 1m³) before being used in the mixer 31 of Fig 1B, then the dry homogeneous mixture 11 will absorb moisture from the air and convert into a homogeneous mixture 14 which first needs to be dried in step 45 before being introduced into the mixer 31. As the moisture content of the dry homogeneous mixture 11 is important for the quality of the shaped object, in practice usually first the moisture content of the homogeneous mixture 14 is measured, and if it is higher than the predetermined value (e.g. in equilibrium with air having a dew point of 18 °C), then the homogeneous mixture 14 is dried in step 45 by bringing it in contact with dry warm air having a temperature of e.g. 50 °C and a dew point of e.g. 18°C. Preferably hereby a relatively low temperature of 50 °C is used to limit the warming-up of the homogeneous mixture 14. It is desirable to limit the temperature of the dry homogeneous mixture to about 35 °C or at most 40 °C.

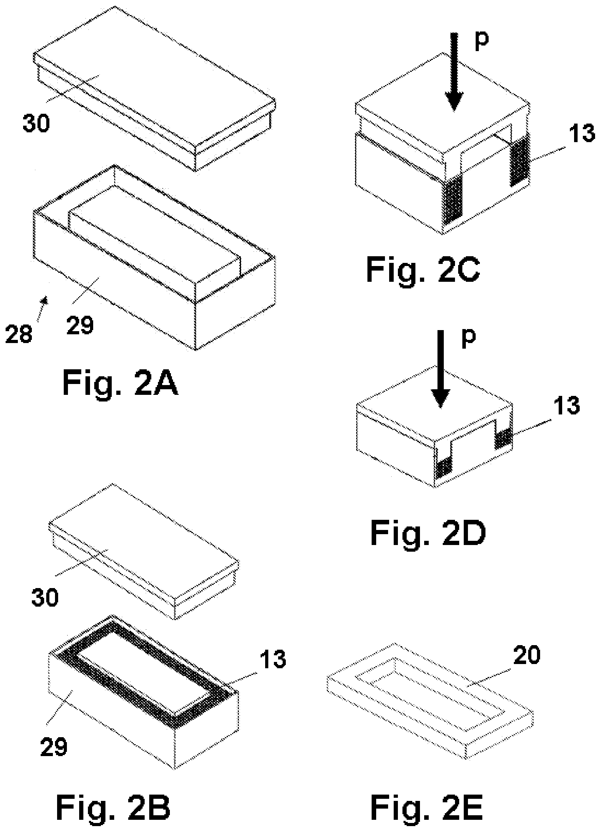

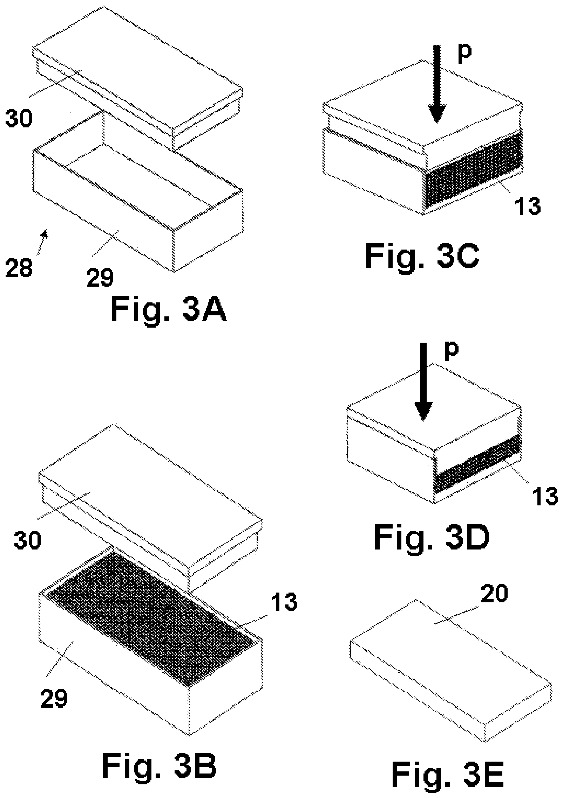

Fig 9 shows schematically a preferred embodiment of a mixer 31 for adding at least one polyol 7 and at least one isocyanate 8 to the dry homogeneous mixture 11, and for distributing them as uniformly as possible, thereby forming a viscous homogeneous mixture 13. A motor 32 drives a shaft 37 which rotates inside a mixing chamber 38. On this shaft 37 is a spiral (not shown) resembling the screw of a typical injection moulding machine for moving the mixture in the mixing chamber 38 and to build up a pressure (of e.g. 2 bar). On this shaft 37 are also elements (not shown) for distributing the polyol 7 and the isocyanate 8 over the mixture. These elements may for example be flat or curved square or rectangular teeth (of e.g. 10 cm x 10 cm x 1 cm) attached to the shaft 37, and located at a distance (e.g. 10 cm) apart, and showing an angle (e.g. nearly 90°) relative to each other and having an angle to the shaft (e.g. alternating an angle of +45° and -45° for subsequent elements). But other mixers 31 suitable for distributing a liquid into a dry granulate may also be used. There are three inlets fitted to the mixer 31, more specifically to the mixing chamber 38: a first inlet 33 for introducing the dry homogeneous mixture 11, a second inlet 34 for adding at least one polyol 7, a third inlet 35 for adding at least one isocyanate 8. During operation of the mixer 31 first a quantity of the dry homogeneous mixture 11 will be introduced in the mixing chamber 38. This dry homogeneous mixture 11 is preferably at a temperature of at most 40 °C, at most 35 °C, preferably at ambient temperature (i.e. approximately 18°C in winter time, to 30°C in summer time). Temperatures above 30°C may occur for example when a local drying step 45 of the homogeneous mixture 11 occurs as discussed in Fig 1A and Fig 1B. After introducing a quantity of the dry homogeneous mixture 11 in the mixing chamber 38 (e.g. approximately 8 kg, depending on the dimensions of the mixer), an amount of polyol 7 (e.g. approximately 280 g) and a quantity of isocyanate 8 (e.g. approximately 280 g), together being 7 percent by weight of the dry homogeneous mixture 11, are added, and distributed as uniformly as possible during a predetermined time (e.g. about 20-30 seconds) after adding the polyol 7 and the isocyanate 8, to form a viscous homogeneous mixture 13. The mixer 31 is preferably constructed such that after this predetermined time sufficient pressure is built up in the mixing chamber 38 so that the mechanical outlet valve 36 upon which a mechanical counter-pressure is exerted (e.g. by means of a spring) will open, so that the viscous homogeneous mixture 13 may leave the mixing chamber 38, and may be introduced into a mould 28. This is shown in Fig 2A or 3A. The mould 28 is preferably made of steel, to be able to resist the high pressure of 100-200 bar. It was found that approximately 5 kg viscous homogeneous mixture remains in the mixing chamber 38 after opening of the outlet valve 36, in particular on the walls of the mixing chamber 38, on the spiral and the teeth, which would solidify onto the machine 31 if it would be shut down. To prevent that the mixing machine 31 will become blocked over time, the machine is so-called "dry flushed" before it is stopped. This may e.g. be done by filling the machine 31 again with the dry homogeneous mixture 11, but without the addition of polyol 7 and isocyanate 8. Because polyurethane is a thermoset material, this material may be recycled again. Flushing with another dry mixture (e.g. dried granules of thermoset particles without fibers) is also possible.

Fig 2A shows an example of a mould 28 for producing a rectangular frame (see Fig 2E), but other shapes considered suitable by the skilled person may also be used. As the mould 28 is not actively heated or cooled, the temperature of the mould 28 is approximately equal to the temperature of the environment (e.g. 18 °C in winter time - 30 °C in summer time), although the mould 28 will slightly warm-up during production (e.g. +5 to 10°C) because of compressing the viscous homogeneous mixture 13 and due to the exothermic reaction of the polyol 7 and the isocyanate 8. The mould 28 shown in Figure 2A consists of two parts, a lower part 29 with a cavity in which the viscous homogeneous mixture 13 is introduced (Fig 2B), and an upper part 30 which is moved towards the lower part 29, whereafter the two parts 29, 30 are being pressed together (Fig. 2C and Fig 2D) under a predetermined pressure p, e.g. in a conventional press. To obtain a shaped object 20 with desired mechanical properties (e.g. hardness, flexural strength, tensile strength, porosity) this pressure p is a pressure of at least 50 bar, preferably at least 100 bar, more preferably at least 150 bar, even more preferably at least 175 bar, most preferably at least 200 bar. This pressure p may be maintained during the entire curing period (e.g. 4 - 8 minutes) or during only a portion thereof (e.g. 2 minutes), but other curing periods are also possible, e.g. 1 minute or 30 seconds. After curing, the mould 28 is opened, and the shaped object 20 is removed from the mould. Fig 2E shows an example of a thus formed rectangular frame, which may e.g. be used as base plate (foundation pad) for a fire hydrant. Typical dimensions are: 11 cm high, 70 cm long, 50 cm wide, 8 cm wall thickness.

Figures 3A-3E show a second example of a mould 28 with another cavity, and a second shaped object 20, in this case a floor tile or a paving tile or a cover or a flat plate with predetermined dimensions (length, width and thickness). The mechanical properties of this cover 20 are both determined by the raw materials used:
- the choice of the fiber material, e.g. glass fiber, carbon fiber or fibers of thermoset materials, whereby carbon fibers usually provide a greater strength than e.g. glass fibers;
- the average length of the fibers, e.g. 8 mm;
- the choice of the granulate of thermoset particles, which is e.g. derived from recycled polyurethane or recycled bakelite or other thermoset materials;
- the average particle size (also called "grain size") of the granulate, e.g. 6 mm;
- the volume percent of the dry fiber material and the dry granulate, e.g. a ratio 20/80 or 30/70 or 40/60 or 50/50;
- the amount of polyol 7 and the amount of isocyanate 8 added to the dry homogeneous mixture 11, e.g. approximately 290 g isocyanate and approximately 270 g polyol which are added to approximately 8 kg of dry mixture;
and also by the process parameters:
- the temperature, moisture content and uniformity of the dry homogeneous mixture 11, the time during which the viscous mixture is being mixed in the mixer 31, the temperature, moisture content and uniformity of the viscous mixture 13, the temperature of the mould 28, the pressure p exerted upon the mould 28 during curing, the time during which the pressure p is applied (e.g. 2 minutes),
   and by external factors, such as temperature and humidity of the environment, although these are as far as possible excluded.

The skilled person may measure the mechanical properties of a shaped object 20 thus produced, and may adjust the choice of the materials and/or the mixing ratio and/or the process parameters, if required. The inventor has found that metal fibers or metal chips also work well as filler material and show good adhesion to the binder (polyurethane), but he has also found that they lead to rust and form sharp protrusions on the surface of the shaped product 20, which is undesirable. Incorporating e.g. an aluminum handle or an aluminum plate with an inscription (e.g. coordinates) on the other hand is very interesting.

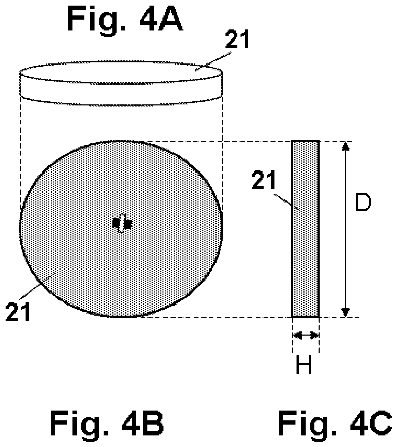

Figures 4A-4C show respectively. in perspective view, top view and side view an example of a drain cover 21 (also called "cover for a drain inspection point") which may be produced according to the method described above. This drain cover 21 has a thickness of e.g. 50 mm and a diameter of e.g. 160, 250, 315, 400 or 630 mm, but drain covers 21 with other dimensions may also be produced. Such drain covers 21 are today usually made of concrete or steel or cast iron, and the mechanical requirements which they have to meet are specified in the standard NBN EN 124. In summary, it means that there are three load classes defined for drain covers, load class A (15 kN) for traffic zones which may only be used by pedestrians or cyclists, load class B (125 kN) for sidewalks, parking lots or parking floors for cars, and load class C (250 kN) for zones between roadway and sidewalk, and parking spaces accessible to heavy traffic. The test consists in that using a given force (15 kN, 125 kN, 250 kN) a stamp having a diameter of 25 cm is pressed on the drain cover 21, whereby certain criteria must be met with respect to static load, dynamic load, and breaking load, as described in the standard NBN EN 124. A drain cover 21 which meets load class B also meets load class A. A drain cover 21 which meets load class C also meets load classes A and B.

The inventor has experimentally found that a drain cover 21 of 50 mm thick and e.g. 315 mm in diameter which meets load class B according to standard NBN EN 124, and a drain cover 21 of 60 mm thick and e.g. 315 mm in diameter which meets load class C according to standard NBN EN 124 may be manufactured by a method as described above, in which:
- the fibrous material mainly comprises recycled glass fibers;
- the fiber material is reduced in size until the average length of the fiber material is approximately 6 mm;
- drying of the fiber material is performed by bringing it in contact with hot dry air having a temperature of 250 °C, and drying the air until the air reaches a dew point of at most 5 °C. (This may e.g. be performed in a known dry air supply system such as commercially available from Mann+Hummel under the brandname Somos®);
- the granulate of thermoset particles mainly comprises recycled polyurethane particles;
- the granules are reduced in size until the average particle diameter of the granules is approximately 6 mm;
- drying the granulate of the thermoset particles is performed by bringing it in contact with dry hot air having a temperature of 150°C, and drying the air in a second dry air supply system, until this air has reached a dew point of at most 18 °C;
- the volume percent of the fiber material in the dry homogeneous mixture 11 is approximately 40%, and the volume percentage of the granules in the dry homogeneous mixture 11 is approximately 60%;
- this dry homogeneous mixture 11 is possibly stored a few hours or days in bags (or containers or "big bags"), exposed to the ambient air until it may be processed in the mixer 31;
- drying the homogeneous mixture 11 again just before processing in the mixer 31, by bringing it in contact with dry warm air of 50 °C in a third dry air supply system until the air has reached a dew point of at most 18 °C ;
- the weight percentage of the polyol 7 and the isocyanate 8 which is added to the dry homogeneous mixture 11 under ambient temperature (typically 18 °C in winter - 30 °C in summer) together is approximately 7 weight percent of the dry homogeneous mixture 11;
- the quantity of the viscous homogeneous mixture 13 which is introduced into the mould 28 is approximately 2.0 times the volume of the open space in the mould 28;
- the curing occurs in a mould 28 which has a temperature of approximately 18 °C - 30 °C, whereby the curing takes place under a pressure of approximately 200 bar, whereby the pressure is maintained during a period of approximately four minutes.

Comparative tests for making such drain covers, whereby the same amount of viscous homogeneous mixture 13 was introduced into the mould 28, but whereby the pressure p was maintained for only 2 minutes instead of 4 minutes, showed that the thickness of the drain cover was approximately 5.2 - 5.3 cm instead of 5.0 cm. Although the mechanical properties of this cover were not precisely determined, it is expected that it was at least 10% less strong (e.g. in terms of deflection).

The factor of approximately 2.0 volume compression was observed in manufacturing drain covers with a thickness of 5 cm and a diameter of 25 cm, 30 cm and 40 cm. (other diameters were not tested).

Drop tests whereby this drain cover 21 was dropped from a height of 3 and 7 meters on a hard surface (clinkers) without breaking, show that this drain cover 21 has a high impact resistance. Concrete drain covers are much more fragile. Temperature tests have shown that the drain covers 21 according to the invention are suitable for use in a temperature range of -40 °C to +70 °C and that the thermal expansion is negligibly small.

The inventor has also surprisingly found that the material of this drain cover 21 attaches very well to cement or concrete. Other advantages of this drain cover are that it is easy to drill, cut, mill, saw, etc. into this material, which is not possible or much more difficult with a cast iron cover. Moreover, the surface of the cover also turns out to show very good anti-slip properties, so that the traditional protruding small blocks present on classical cast iron drain covers to increase the grip of shoes or tires during winter, may be omitted. These blocks are very inconvenient for pedestrians and cyclists. Finally, the weight of the drain cover 21 according to the invention (typically 4 kg) is much lighter than a comparable cast iron drain cover (typically 8 kg), making it easier to open or install. Moreover, it does not rust, but retains its aesthetical appearance. Furthermore, it can not become stuck by rusting, which is a major advantage compared to cast iron drain covers, where one is often faced with this problem.

These improved mechanical properties will naturally also apply to other shaped objects 20 produced by this method and with the same composition, regardless of the specific shape.

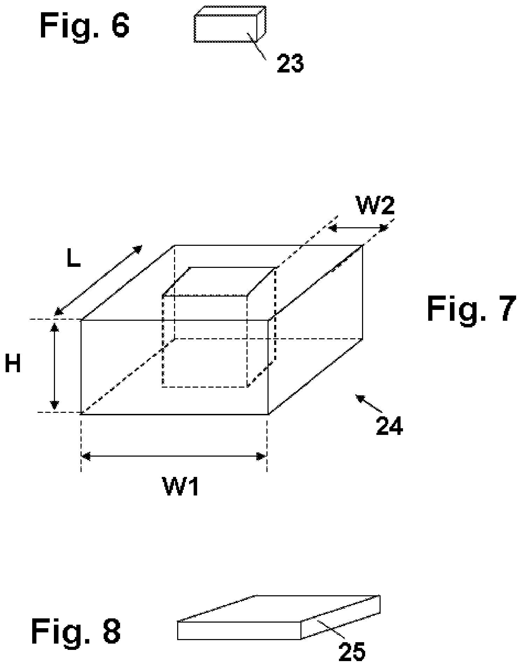

Trials where the same viscous homogeneous mixture 13 was used for the manufacture of a foundation pad for a hydrant 24 (as shown in Fig 3E or Fig 8) whereby a pressure of 130 bar was used, and whereby the pressure was maintained for only 2 minutes, showed that the quantity of the viscous homogeneous mixture 13 to be introduced in the mould 28 is only approximately 1.5 times the volume of the space in the mould 28.

To produce drain covers 21 which satisfy load class A of the standard NBN EN 124 probably a pressure of 100 bar is already sufficient, and/or the volume% of fiber material may probably be reduced, and/or a smaller average fiber length may be sufficient. The skilled person may readily determine the influence of each of the above mentioned parameters, or one or several combinations thereof, on the flexural strength of the drain cover 21 by performing routine tests.

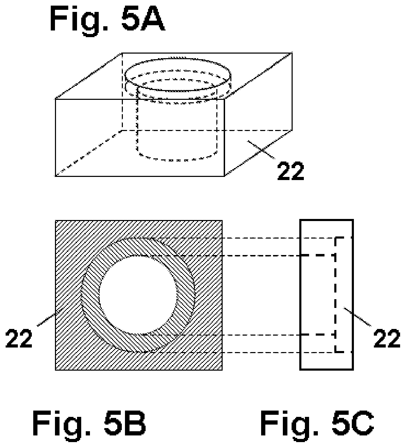

Figures 5A-5C show respectively in perspective view, top view and side view an example of a sewer pit 22 which may be manufactured according to the method as described above. Typical outer

The inventor has also surprisingly found that the material of this drain cover 21 attaches very well to cement or concrete. Other advantages of this drain cover are that it is easy to drill, cut, mill, saw, etc. into this material, which is not possible or much more difficult with a cast iron cover. Moreover, the surface of the cover also turns out to show very good anti-slip properties, so that the traditional protruding small blocks present on classical cast iron drain covers to increase the grip of shoes or tires during winter, may be omitted. These blocks are very inconvenient for pedestrians and cyclists. Finally, the weight of the drain cover 21 according to the invention (typically 4 kg) is much lighter than a comparable cast iron drain cover (typically 8 kg), making it easier to open or install. Moreover, it does not rust, but retains its aesthetical appearance. Furthermore, it can not become stuck by rusting, which is a major advantage compared to cast iron drain covers, where one is often faced with this problem.

These improved mechanical properties will naturally also apply to other shaped objects 20 produced by this method and with the same composition, regardless of the specific shape.

Trials where the same viscous homogeneous mixture 13 was used for the manufacture of a foundation pad for a hydrant 24 (as shown in Fig 3E or Fig 7) whereby a pressure of 130 bar was used, and whereby the pressure was maintained for only 2 minutes, showed that the quantity of the viscous homogeneous mixture 13 to be introduced in the mould 28 is only approximately 1.5 times the volume of the space in the mould 28.

To produce drain covers 21 which satisfy load class A of the standard NBN EN 124 probably a pressure of 100 bar is already sufficient, and/or the volume% of fiber material may probably be reduced, and/or a smaller average fiber length may be sufficient. The skilled person may readily determine the influence of each of the above mentioned parameters, or one or several combinations thereof, on the flexural strength of the drain cover 21 by performing routine tests.

Figures 5A-5C show respectively in perspective view, top view and side view an example of a sewer pit 22 which may be manufactured according to the method as described above. Typical outer dimensions are e.g. 40 cm x 40 cm x 20 cm, but the invention is not limited thereto, and sewer pits 22 with other dimensions or shapes are also possible.

Figures 6 to 8 show examples of other typical shaped objects 20 which may be produced according to the method of the present invention, but the invention is not limited thereto, and other shapes are also possible, such as planters, garden pots or other garden objects, but also other objects are possible.

Fig 6 shows a clinker 23 as may be used on a driveway or parking lot. Typical dimensions of such a clinker are 10 cm x 10 cm x 20 cm. The low weight, the ability for mechanical machining (cutting, sawing, milling, drilling, etc.), the frost-resistance, the anti-slip and the shock resistance are highly desirable properties of this product for this application. Moreover, its cost will be very low when for at least part of the raw materials reject or recycled materials are used.

Figure 7 shows a hollow tube 24 which may be used as a frame for a fire hydrant. Typical dimensions for this tube 24 are: W1=60cm, H=20cm, L=40cm, W2=4cm. The weight of a tube according to the invention is approximately 24 kg. Such tubes offer e.g. protection to fire hydrants against damage induced by e.g. flail mowers, when they are cutting the crop along the side of the street, and accidentally collide against such tube 24. The impact resistance of the material of the tube 24 as obtained by the method of the invention is particularly suitable to absorb shocks of such flail mowers.

Fig 8 shows a floor tile or paving tile 25. Typical dimensions are e.g. 20 cm x 20 cm x 4 cm thick, or 30 cm x 30 cm x 4 cm thick. The same favorable properties as for the clinker are also applicable here.

But the invention is not limited to the shapes shown in the figures. For example, the method may also used for manufacturing round frames, flat rectangular or round panels, round or rectangular lids, hollow cylindrical or bar-shaped pits, etc.

Preferably, at least one kind of recycled fiber material and / or at least one kind of recycled thermoset particles are used.

Preferably, the recycled thermoset particles are at least partly derived from one or more kayaks, one or more plastic windows, billiard

## Claims

1. A method for manufacturing a shaped object (20) from a composite material which comprises thermoset particles, **characterised in that** the method comprises the following steps:
a) providing a dry homogeneous mixture (11) comprising fiber material (4) with an average length of 2 - 40 mm and a granulate of thermoset particles with an average particle size of 2 - 15 mm, whereby the volume percent of the fiber material is 10 - 80% of the dry homogeneous mixture (11), and whereby the dry homogeneous mixture (11) has a moisture content which is in equilibrium with air having a dew point of at most 25 °C;
b) adding at least one polyol (7) and at least one isocyanate (8) to the dry homogenous mixture (11) for forming a viscous mixture (12), whereby the weight percent of the at least one polyol (7) and the at least one isocyanate (8) together is 4.0 - 25.0% of the dry homogeneous mixture (11), and mixing the viscous compound mixture (12), thereby forming a viscous homogeneous mixture (13);
c) forming a shaped object (20) by curing the viscous homogeneous mixture (13) in a mould at a temperature of 15 - 60 °C and under a pressure (p) of at least 50 bar, whereby the pressure (p) is maintained during at least 1 minute.

2. The method according to claim 1, wherein providing the dry homogeneous mixture (11) comprises the following steps:
- providing a fiber material with an average length of 2 - 40 mm, and drying the fiber material (4) until the fiber material has a moisture content which is in equilibrium with air having a dew point of at most 25 °C, thereby forming a dried fiber material (6);
- providing a granulate of thermoset particles with an average particle size of 2 - 15 mm, and drying of the granulate until the granulate has a moisture content which is in equilibrium with air having a dew point of at most 25 °C, thereby forming a dried granulate (3);
- mixing the dried fiber material (6) and the dried granulate (3) to obtain the dry homogeneous mixture (11), whereby the volume percent of the dried fiber material (6) is 10 - 80% of the dry homogeneous mixture (11).

3. The method according to claim 2, wherein the drying of the fiber material (4) is performed by bringing it in contact with warm air having a temperature of 100 - 300 °C, preferably 150 - 300 °C, more preferably 200 - 275 °C, most preferably approximately 250 °C, and/or the drying of the granulate (4) is performed by bringing it in contact with warm air having a temperature of 100-175 °C, preferably a temperature of 125 -160 °C, more preferably a temperature of approximately 150 °C.

4. The method according to claim 1, wherein providing the dry homogeneous mixture (11) comprises the following steps:
- providing a fiber material (5) having an average length of 2 - 40 mm;
- providing a granulate of thermoset particles (2) having an average particle size of 2 - 15 mm;
- mixing the fiber material (5) and the granulate (2), whereby the volume percent of the fiber material (5) is 10-80% of the mixture, and mixing the mixture into a homogeneous mixture;
- drying the homogeneous mixture until the mixture has a moisture content which is in equilibrium with air having a dew point of at most 25 °C, thereby forming the dry homogeneous mixture (11).

5. The method according to any one of the preceding claims, wherein the dry homogeneous mixture (11) has at least one feature and possibly all features selected from
- a temperature of at most 50 °C, preferably of at most 45 °C, more preferably of at most 40 °C, even more preferably of at most 35 °C, and
- a moisture content which is in equilibrium with air having a dew point of 5 °C - 22 °C, preferably 10°C - 20°C, most preferably approximately 18°C.

6. The method according to any one of the preceding claims, wherein the mixing of the viscous mixture (12) is performed in a period of 10 seconds - 10 minutes, preferably 10 seconds - 5 minutes, more preferably 10 seconds - 2 minutes, even more preferably 10 - 60 seconds, most preferably approximately 20 seconds.

7. The method according to any one of the preceding claims, wherein the average length of the fiber material (4) is a length of 2 - 30 mm, preferably 3 - 20 mm, more preferably 4 - 15 mm, even more preferably 6 - 12 mm, most preferably approximately 8 mm, and/or the granulate (2) has an average particle diameter of 2 - 10 mm, preferably 3 - 7 mm, more preferably approximately 6 mm.

8. The method according to any one of the preceding claims, wherein the volume percent of the fiber material (4) in the dry mixture is 20-60%, preferably 30-50%, more preferably approximately 40%.

9. The method according to any one of the preceding claims, wherein the weight percent of the at least one polyol (7) and the at least one isocyanate (8) together is 5.0 - 20.0% of the dry homogenous mixture (11), preferably 5.0 - 15.0%, more preferably 5.5 - 10.0 %, most preferably approximately 7.0%.

10. The method according to any one of the preceding claims, wherein the curing occurs in the mould (28) at a temperature of 15 - 50 °C, preferably 15 - 40 °C, more preferably 15 - 30 °C, most preferably approximately 20 °C, and/or at a pressure (p) of at least 100 bar, preferably at least 150 bar, more preferably at least 175 bar, most preferably at least 200 bar.

11. The method according to any one of the preceding claims, wherein the fiber material (4) comprises glass fibers or carbon fibers, or fibers of thermoset materials and/or the granulate of thermoset particles (2) comprises bakelite and/or polyester particles and/or polyurethane particles and/or cellulose particles.

12. The method according to any one of the preceding claims, wherein at least one kind of recycled fiber material and/or at least one kind of recycled thermoset particles are used, preferably the recycled thermoset particles being at least partly derived from one or more kayaks, one or more plastic windows, billiard balls, or combinations thereof, and/or the recycled fiber material being at least partly derived from the group of used or reject glass fibers, fiber glass mats, belts, shoes, or combinations thereof.

13. The method according to claim 12, wherein a volumetric quantity of the viscous homogeneous mixture (13) which is introduced into the mould (28) is 1.3 - 2.3 times the volume of the shaped object (20), preferably 1.8 - 2.2 times.

14. The method according to any one of the preceding claims for producing a composite drain cover (21) which meets the requirements of load class A and/or B and/or C according to standard NBN EN 124, whereby preferably:
- the fiber material comprises recycled glass fibers;
- the average length of the dried fiber material (6) is 4-10 mm;
- the granulate of thermoset particles comprises recycled polyurethane;
- the average particle diameter of the dried granulate (2) is 4-8 mm;
- the volume percent of the dried fiber material (6) in the dry homogeneous mixture (11) is 30% - 60%;
- the weight percent of the polyol (7) and the isocyanate (8) which is added to the dry homogeneous mixture (11) together is 5 - 10% of the dry homogeneous mixture (11);
- the dry homogeneous mixture (11) has a moisture content which is in equilibrium with air having a dew point of 10 - 20 ° C;
- the quantity of the viscous mixture (12) which is introduced in the mould (28) is 1.8 - 2.2 times the volume of the space in the mould (28);
- the curing takes place in a mould (20) at a temperature of 18 - 35 °C which is subjected to a pressure of at least 50 bar, during a period of at least 2 minutes.

15. The method according to any one of the preceding claims wherein the object (20) is selected from the group of: a drain cover (25), a drain cover (25) which meets the requirements of load class A and/or load class B and/or load class C according to the standard NBN EN 124, a grating, an animal house grating, a clincker (23), a floor tile (25), a roof tile, a base plate for a fire hydrant and a frame for a fire hydrant (24).

## Patentansprüche

1. Ein Verfahren zur Herstellung eines Formobjekts (20) aus einem Verbundstoff, der wärmehärtende Partikel umfasst, **dadurch gekennzeichnet, dass** das Verfahren die folgenden Schritte umfasst:
a) Bereitstellen einer trockenen homogenen Mischung (11), welche Fasermaterial (4) mit einer durchschnittlichen Länge von 2 bis 40 mm und ein Granulat aus wärmehärtenden Partikeln mit einer durchschnittlichen Korngröße von 2 bis 15 mm umfasst, wobei der Volumenanteil des Fasermaterials 10 bis 80 % der trockenen homogenen Mischung (11) beträgt, und wobei die trockene homogene Mischung (11) einen Feuchtigkeitsgehalt hat, der im Gleichgewicht mit Luft ist, die einen Taupunkt von höchstens 25 °C hat;
b) Hinzufügen von zumindest einem Polyol (7) und zumindest einem Isocyanat (8) zur trockenen homogenen Mischung (11) zur Bildung einer viskosen Mischung (12), wobei der Gewichtsanteil des zumindest einen Polyols (7) und des zumindest einen Isocyanats (8) zusammen 4,0 bis 25,0 % der trockenen homogenen Mischung (11) beträgt, und Mischen der viskosen Stoffmischung (12), wodurch eine viskose homogene Mischung (13) gebildet wird;
c) Formen eines Formobjekts (20) durch Aushärten der viskosen homogenen Mischung (13) in einem Formstück bei einer Temperatur von 15 bis 60 °C und unter einem Druck (p) von mindestens 50 bar, wobei der Druck (p) mindestens 1 Minute lang gehalten wird.

2. Das Verfahren nach Anspruch 1, wobei die Bereitstellung der trockenen homogenen Mischung (11) die folgenden Schritte umfasst:
- Bereitstellen eines Fasermaterials mit einer durchschnittlichen Länge von 2 bis 40 mm, und Trocknen des Fasermaterials (4), bis das Fasermaterial einen Feuchtigkeitsgehalt hat, der im Gleichgewicht mit Luft ist, die einen Taupunkt von höchstens 25 °C hat, wodurch ein getrocknetes Fasermaterial (6) gebildet wird;
- Bereitstellen eines Granulats von wärmehärtenden Partikeln mit einer durchschnittlichen Korngröße von 2 bis 15 mm, und Trocknen des Granulats, bis das Granulat einen Feuchtigkeitsgehalt hat, der im Gleichgewicht mit Luft ist, die einen Taupunkt von höchstens 25 °C hat, wodurch ein getrocknetes Granulat (3) gebildet wird;
- Mischen des getrockneten Fasermaterials (6) und des getrockneten Granulats (3), um die trockene homogene Mischung (11) zu erhalten, wobei der Volumenanteil des getrockneten Fasermaterials (6) 10 bis 80 % der trockenen homogenen Mischung (11) beträgt.

3. Das Verfahren nach Anspruch 2, wobei das Trocknen des Fasermaterials (4) durchgeführt wird, indem es in Kontakt mit heißer Luft mit einer Temperatur von 100 bis 300 °C gebracht wird, bevorzugt 150 bis 300 °C, noch besser 200 bis 275 °C, am besten ungefähr 250 °C, und/oder das Trocknen des Granulats (4) durchgeführt wird, indem es in Kontakt mit heißer Luft mit einer Temperatur von 100 bis 175 °C gebracht wird, bevorzugt eine Temperatur von 125 bis 160 °C, noch besser eine Temperatur von ungefähr 150 °C.

4. Das Verfahren nach Anspruch 1, wobei die Bereitstellung der trockenen homogenen Mischung (11) die folgenden Schritte umfasst:
- Bereitstellen eines Fasermaterials (5) mit einer durchschnittlichen Länge von 2 bis 40 mm;
- Bereitstellen eines Granulats von wärmehärtenden Partikeln (2) mit einer durchschnittlichen Korngröße von 2 bis 15 mm;
- Mischen des Fasermaterials (5) und des Granulats (2), wobei der Volumenanteil des Fasermaterials (5) 10 bis 80 % der Mischung beträgt, und Mischen der Mischung in eine homogene Mischung;
- Trocknen der homogenen Mischung, bis die Mischung einen Feuchtigkeitsgehalt hat, der im Gleichgewicht mit Luft ist, die einen Taupunkt von höchstens 25 °C hat, wodurch die trockene homogene Mischung (11) gebildet wird.

5. Das Verfahren nach irgendeinem der vorigen Ansprüche, wobei die trockene homogene Mischung (11) zumindest ein Merkmal und möglicherweise alle Merkmale ausgewählt aus den Folgenden hat:
- eine Temperatur von höchstens 50 °C, bevorzugt von höchstens 45 °C, noch besser von höchstens 40 °C, und sogar noch besser von höchstens 35 °C, und
- ein Feuchtigkeitsgehalt, der im Gleichgewicht mit Luft ist, die einen Taupunkt von 5 °C bis 22 °C hat, bevorzugt 10 °C bis 20 °C, am besten ungefähr 18 °C.

6. Das Verfahren nach irgendeinem der vorigen Ansprüche, wobei das Mischen der viskosen Mischung (12) in einem Zeitraum von 10 Sekunden bis 10 Minuten durchgeführt wird, bevorzugt 10 Sekunden bis 5 Minuten, noch besser 10 Sekunden bis 2 Minuten, sogar noch besser 10 bis 60 Sekunden, am besten ungefähr 20 Sekunden.

7. Das Verfahren nach irgendeinem der vorigen Ansprüche, wobei die durchschnittliche Länge des Fasermaterials (4) eine Länge von 2 bis 30 mm ist, bevorzugt 3 bis 20 mm, noch besser 4 bis 15 mm, sogar noch besser 6 bis 12 mm, am besten ungefähr 8 mm, und/oder das Granulat (2) einen durchschnittlichen Partikeldurchmesser von 2 bis 10 mm hat, bevorzugt 3 bis 7 mm, noch besser ungefähr 6 mm.

8. Das Verfahren nach irgendeinem der vorigen Ansprüche, wobei der Volumenanteil des Fasermaterials (4) in der trockenen Mischung 20 bis 60 % beträgt, bevorzugt 30 bis 50 %, noch besser ungefähr 40 %.

9. Das Verfahren nach irgendeinem der vorigen Ansprüche, wobei der Gewichtsanteil des zumindest einen Polyols (7) und des zumindest einen Isocyanats (8) zusammen 5,0 bis 20,0 % der trockenen homogenen Mischung (11) beträgt, bevorzugt 5,0 bis 15,0 %, noch besser 5,5 bis 10,0 %, am besten ungefähr 7,0 %.

10. Das Verfahren nach irgendeinem der vorigen Ansprüche, wobei das Aushärten im Formstück (28) bei einer Temperatur von 15 bis 50 °C erfolgt, bevorzugt 15 bis 40 °C, noch besser 15 bis 30 °C, am besten ungefähr 20 °C, und/oder bei einem Druck (p) von mindestens 100 bar, bevorzugt mindestens 150 bar, noch besser mindestens 175 bar, am besten mindestens 200 bar.

11. Das Verfahren nach irgendeinem der vorigen Ansprüche, wobei das Fasermaterial (4) Glasfasern oder Carbonfasern, oder Fasern von wärmehärtenden Materialien umfasst und/oder das Granulat von wärmehärtenden Partikeln (2) Bakelit- und/oder Polyesterpartikel und/oder Polyurethanpartikel und/oder Cellulosepartikel umfasst.

12. Das Verfahren nach irgendeinem der vorigen Ansprüche, wobei zumindest eine Art von recyceltem Fasermaterial und/oder zumindest eine Art von recycelten wärmehärtenden Partikeln verwendet werden, wobei die recycelten wärmehärtenden Partikel bevorzugt zumindest teilweise von einem oder mehreren Kajaks, einem oder mehreren Kunststofffenstern, Billardkugeln, oder Kombinationen davon abgeleitet sind, und/oder das recycelte Fasermaterial zumindest teilweise von der Gruppe gebrauchter oder ausgemusterter Glasfasern, Faserglasmatten, Gürtel, Schuhe, oder Kombinationen davon abgeleitet ist.

13. Das Verfahren nach Anspruch 12, wobei eine Volumenmenge der viskosen homogenen Mischung (13), die in das Formstück (28) eingebracht wird, 1,3 bis 2,3 Mal das Volumen des Formobjekts (20) ist, bevorzugt 1,8 bis 2,2 Mal.

14. Das Verfahren nach irgendeinem der vorigen Ansprüche zur Herstellung eines Verbund-Kanaldeckels (21), der die Anforderungen von Belastungsklasse A und/oder B und/oder C gemäß Norm NBN EN 124 erfüllt, wobei bevorzugt:
- das Fasermaterial recycelte Glasfasern umfasst;
- die durchschnittliche Länge des getrockneten Fasermaterials (6) 4 bis 10 mm beträgt;
- das Granulat von wärmehärtenden Partikeln recyceltes Polyurethan umfasst;
- der durchschnittliche Partikeldurchmesser des getrockneten Granulats (2) 4 bis 8 mm beträgt;
- der Volumenanteil des getrockneten Fasermaterials (6) in der trockenen homogenen Mischung (11) 30 % bis 60 % beträgt;
- der Gewichtsanteil des Polyols (7) und des Isocyanats (8), das der trockenen homogenen Mischung (11) zugesetzt wird, zusammen 5 bis 10 % der trockenen homogenen Mischung (11) beträgt;
- die trockene homogene Mischung (11) einen Feuchtigkeitsgehalt hat, der im Gleichgewicht mit Luft ist, die einen Taupunkt von 10 bis 20 °C hat;
- die Menge der viskosen Mischung (12), die in das Formstück (28) eingebracht wird, 1,8 bis 2,2 Mal das Volumen des Raums im Formstück (28) ist;
- das Aushärten in einem Formstück (20) bei einer Temperatur von 18 bis 35 °C erfolgt, das einem Druck von mindestens 50 bar, während eines Zeitraums von mindestens 2 Minuten, ausgesetzt wird.

15. Das Verfahren nach irgendeinem der vorigen Ansprüche, wobei das Stück (20) ausgewählt ist aus der Gruppe bestehend aus:
einem Kanaldeckel (25), einem Kanaldeckel (25), der die Anforderungen von Belastungsklasse A und/oder Belastungsklasse B und/oder Belastungsklasse C gemäß Norm NBN EN 124 erfüllt, einem Gitter, einem Stallgitter, einem Klinker (23), einer Bodenplatte (25), einem Dachziegel, einer Bodenplatte für einen Feuerhydranten und einem Rahmen für einen Feuerhydranten (24).

## Revendications

1. Procédé de fabrication d'un objet façonné (20) à partir d'un matériau composite qui comprend des particules thermodurcies, **caractérisé en ce que** le procédé comprend les étapes suivantes :
a) fourniture d'un mélange homogène sec (11) comprenant un matériau en fibres (4) d'une longueur moyenne de 2 à 40 mm et un granulé de particules thermodurcies d'une taille de particule moyenne de 2 à 15 mm, moyennant quoi le pourcentage en volume du matériau en fibres représente 10 à 80 % du mélange homogène sec (11), et moyennant quoi le mélange homogène sec (11) a une teneur en humidité qui est en équilibre avec l'air ayant un point de rosée d'au plus 25 °C ;
b) ajout d'au moins un polyol (7) et d'au moins un isocyanate (8) au mélange homogène sec (11) pour former un mélange visqueux (12), moyennant quoi le pourcentage en poids de l'au moins un polyol (7) et de l'au moins un isocyanate (8) ensemble représente 4,0 à 25,0 % du mélange homogène sec (11), et mélange du mélange de composés visqueux (12), formant ainsi un mélange homogène visqueux (13) ;
c) formation d'un objet façonné (20) par durcissement du mélange homogène visqueux (13) dans un moule à une température de 15 à 60 °C et à une pression (p) d'au moins 50 bars, moyennant quoi la pression (p) est maintenue pendant au moins 1 minute.

2. Procédé selon la revendication 1, dans lequel la fourniture du mélange homogène sec (11) comprend les étapes suivantes :
- fourniture d'un matériau en fibres d'une longueur moyenne de 2 à 40 mm, et séchage du matériau en fibres (4) jusqu'à ce que le matériau en fibres ait une teneur en humidité qui est en équilibre avec l'air ayant un point de rosée d'au plus 25 °C, formant ainsi un matériau en fibres séché (6) ;
- fourniture d'un granulé de particules thermodurcies d'une taille de particule moyenne de 2 à 15 mm, et séchage du granulé jusqu'à ce que le granulé ait une teneur en humidité qui est en équilibre avec l'air ayant un point de rosée d'au plus 25 °C, formant ainsi un granulé séché (3) ;
- mélange du matériau en fibres séché (6) et du granulé séché (3) pour obtenir le mélange homogène sec (11), moyennant quoi le pourcentage en volume du matériau en fibres séché (6) représente 10 à 80 % du mélange homogène sec (11).

3. Procédé selon la revendication 2, dans lequel le séchage du matériau en fibres (4) est réalisé en l'amenant en contact avec de l'air chaud ayant une température de 100 à 300 °C, de préférence de 150 à 300 °C, de manière davantage préférée de 200 à 275 °C, de manière préférée entre toutes d'approximativement 250 °C, et/ou le séchage du granulé (4) est réalisé en l'amenant en contact avec de l'air chaud ayant une température de 100 à 175 °C, de préférence une température de 125 à 160 °C, de manière davantage préférée une température d'approximativement 150 °C.

4. Procédé selon la revendication 1, dans lequel la fourniture du mélange homogène sec (11) comprend les étapes suivantes :
- fourniture d'un matériau en fibres (5) ayant une longueur moyenne de 2 à 40 mm ;
- fourniture d'un granulé de particules thermodurcies (2) ayant une taille de particule moyenne de 2 à 15 mm ;
- mélange du matériau en fibres (5) et du granulé (2), moyennant quoi le pourcentage en volume du matériau en fibres (5) représente 10 à 80 % du mélange, et mélange du mélange en un mélange homogène ;
- séchage du mélange homogène jusqu'à ce que le mélange ait une teneur en humidité qui est en équilibre avec l'air ayant un point de rosée d'au plus 25 °C, formant ainsi le mélange homogène sec (11).

5. Procédé selon l'une quelconque des revendications précédentes, dans lequel le mélange homogène sec (11) a au moins une particularité et éventuellement toutes les particularités choisies parmi
- une température d'au plus 50 °C, de préférence d'au plus 45 °C, de manière davantage préférée d'au plus 40 °C, de manière encore davantage préférée d'au plus 35 °C, et
- une teneur en humidité qui est en équilibre avec l'air ayant un point de rosée de 5 °C à 22 °C, de préférence de 10 °C à 20 °C, de manière préférée entre toutes d'approximativement 18 °C.

6. Procédé selon l'une quelconque des revendications précédentes, dans lequel le mélange du mélange visqueux (12) est réalisé dans une période de 10 secondes à 10 minutes, de préférence de 10 secondes à 5 minutes, de manière davantage préférée de 10 secondes à 2 minutes, de manière encore davantage préférée de 10 à 60 secondes, de manière préférée entre toutes d'approximativement 20 secondes.

7. Procédé selon l'une quelconque des revendications précédentes, dans lequel la longueur moyenne du matériau en fibres (4) est une longueur de 2 à 30 mm, de préférence de 3 à 20 mm, de manière davantage préférée de 4 à 15 mm, de manière encore davantage préférée de 6 à 12 mm, de manière préférée entre toutes d'approximativement 8 mm, et/ou le granulé (2) a un diamètre de particule moyen de 2 à 10 mm, de préférence de 3 à 7 mm, de manière davantage préférée d'approximativement 6 mm.

8. Procédé selon l'une quelconque des revendications précédentes, dans lequel le pourcentage en volume du matériau en fibres (4) dans le mélange sec est de 20 à 60 %, de préférence de 30 à 50 %, de manière davantage préférée d'approximativement 40 %.

9. Procédé selon l'une quelconque des revendications précédentes, dans lequel le pourcentage en poids de l'au moins un polyol (7) et de l'au moins un isocyanate (8) ensemble est de 5,0 à 20,0 % du mélange homogène sec (11), de préférence de 5,0 à 15,0 %, de manière davantage préférée de 5,5 à 10,0 %, de manière préférée entre toutes d'approximativement 7,0 %.

10. Procédé selon l'une quelconque des revendications précédentes, dans lequel le durcissement se produit dans le moule (28) à une température de 15 à 50 °C, de préférence de 15 à 40 °C, de manière davantage préférée de 15 à 30 °C, de manière préférée entre toutes d'approximativement 20 °C, et/ou à une pression (p) d'au moins 100 bars, de préférence d'au moins 150 bars, de manière davantage préférée d'au moins 175 bars, de manière préférée entre toutes d'au moins 200 bars.

11. Procédé selon l'une quelconque des revendications précédentes, dans lequel le matériau en fibres (4) comprend des fibres de verre ou des fibres de carbone, ou des fibres de matériaux thermodurcis et/ou le granulé de particules thermodurcies (2) comprend des particules de bakélite et/ou de polyester et/ou des particules de polyuréthane et/ou des particules de cellulose.

12. Procédé selon l'une quelconque des revendications précédentes, dans lequel au moins une sorte de matériau en fibres recyclé et/ou au moins une sorte de particules thermodurcies recyclées sont utilisées, de préférence les particules thermodurcies recyclées étant au moins en partie dérivées d'un ou de plusieurs kayaks, d'une ou de plusieurs fenêtres en plastique, de boules de billard, ou de combinaisons de ceux-ci, et/ou le matériau en fibres recyclé étant au moins en partie dérivé du groupe de fibres de verre usagées ou de rebut, de mats de fibres de verre, de courroies, de chaussures, ou de combinaisons de ceux-ci.

13. Procédé selon la revendication 12, dans lequel une quantité volumétrique du mélange homogène visqueux (13) qui est introduit dans le moule (28) représente 1,3 à 2,3 fois le volume de l'objet façonné (20), de préférence 1,8 à 2,2 fois.

14. Procédé selon l'une quelconque des revendications précédentes pour produire une plaque d'égout composite (21) qui satisfait les exigences de classe de charge A et/ou B et/ou C selon la norme NBN EN 124, moyennant quoi de préférence :
- le matériau en fibres comprend des fibres de verre recyclées ;
- la longueur moyenne du matériau en fibres séché (6) est de 4 à 10 mm ;
- le granulé de particules thermodurcies comprend du polyuréthane recyclé ;
- le diamètre de particule moyen du granulé séché (2) est de 4 à 8 mm ;
- le pourcentage en volume du matériau en fibres séché (6) dans le mélange homogène sec (11) est de 30 % à 60 % ;
- le pourcentage en poids du polyol (7) et de l'isocyanate (8) qui est ajouté au mélange homogène sec (11) ensemble représente 5 à 10 % du mélange homogène sec (11) ;
- le mélange homogène sec (11) a une teneur en humidité qui est en équilibre avec l'air ayant un point de rosée de 10 à 20 °C ;
- la quantité du mélange visqueux (12) qui est introduit dans le moule (28) représente 1,8 à 2,2 fois le volume de l'espace dans le moule (28) ;
- le durcissement a lieu dans un moule (20) à une température de 18 à 35 °C qui est soumis à une pression d'au moins 50 bars, pendant une période d'au moins 2 minutes.

15. Procédé selon l'une quelconque des revendications précédentes, dans lequel l'objet (20) est choisi dans le groupe : d'une plaque d'égout (25), d'une plaque d'égout (25) qui satisfait les exigences de classe de charge A et/ou de classe de charge B et/ou de classe de charge C selon la norme NBN EN 124, un grillage, un grillage de locaux pour animaux, une brique (23), un carreau de sol (25), une tuile de toiture, une plaque de base pour une borne d'incendie et un châssis pour une borne d'incendie (24).
